# EUROPEAN PATENT APPLICATION

(11) **EP 1 065 855 A1**
(43) Date of publication of application: **03.01.2001**
(21) Application number: 99112402.5
(22) Date of filing: 29.06.1999
(51) Int. Cl.: H04L 27/26, H04L 1/12

(54) **Adaptation of cyclic extensions in an OFDM communication system**

(71) Applicant: Sony International (Europe) GmbH, 50829 Köln (DE)
(72) Inventor: Konschak, Tino, c/o Sony Int. (Europe) GmbH, 70736 Fellbach (DE); Böhnke, Ralf, c/o Sony Int. (Europe) GmbH, 70736 Fellbach (DE); Dölle, Thomas, c/o Sony Int. (Europe) GmbH, 70736 Fellbach (DE)
(74) Representative: Körber, Martin, Dipl.-Phys.

(57) **Abstract**

The present invention relates to a communication apparatus (9, 26 or 28) and a method for transmitting and receiving information as OFDM-symbols in a wireless telecommunication system, in which between two consecutive OFDM-symbols a cyclic extension of a part of at least one of the OFDM-symbols is transmitted and received, respectively. In one embodiment, a communication apparatus (9) of the present invention comprises determining means (13, 14, 15, 16) for determining a delay value representing a channel delay of a transmission channel between the communication apparatus (9) and another communication apparatus of the wireless telecommunication system, setting means (17) for setting a value for the length of said cyclic extensions on the basis of said delay value determined in said determining means, and transmitting means (19) for transmitting said value for the length of said cyclic extensions. In another embodiment, a communication apparatus (26) according to the present invention comprises receiving means (27) for receiving a length value representing the length of said cyclic extension, inserting means (25) for generating and inserting a cyclic extension between two OFDM-symbols, whereby the length of said cyclic extension is set on the basis of said received length value, and transmitting means (19) for transmitting OFDM-symbols, whereby respective cyclic extension from said inserting means is inserted between two consecutive OFDM-symbols.

The present invention is particularly advantageous since the transmission overhead caused by the cyclic extensions can be significantly reduced by adapting the length of the cyclic extensions to the delay properties of the actually used transmission channel, while the transmission quality is maintained.

## Description

The present invention relates to a communication apparatus and a communication method for transmitting and receiving information as OFDM-symbols in a wireless telecommunication system, particularly a radio frequency telecommunication system, in which between two consecutive OFDM-symbols a cyclic extension of a part of at least one of the OFDM-symbols is transmitted and received, respectively.

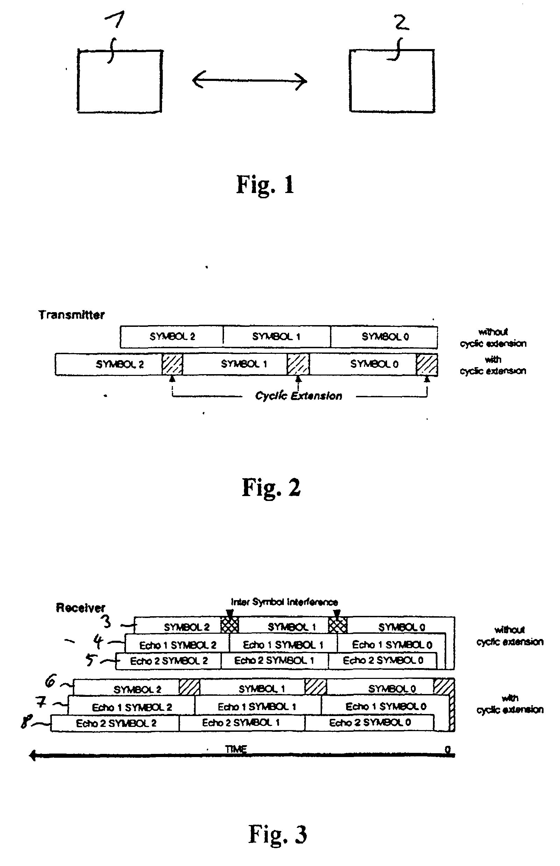

In OFDM-telecommunication systems (Orthogonal Frequency Division Multiplex telecommunication systems), the information is transmitted and received as OFDM-symbols, which are symbols consisting of data modulated onto subcarriers in the frequency domain. The spacing between the subcarriers is equal and the subcarriers are arranged orthogonal in the frequency domain. In figure 1, a very simple telecommunication system comprising a first communication apparatus 1 and a second communication apparatus 2 is shown. The first and the second communication apparatus 1 and 2 communicate, i. e. transmit and receive, information via a wireless transmission channel. The propagation of the signals between the communication apparatuses 1 and 2 depends strongly on a respective environment. Communication apparatuses for wireless telecommunication systems are mostly used in cities, where many buildings disturb the signal propagation and therefore lower the transmission quality. E. g., a signal transmitted from the communication apparatus 1 to the communication apparatus 2 in figure 1 underlies different phenomena on its transmission path, e. g. reflection, absorption and refraction. Due to these phenomena, a data symbol transmitted from the communication apparatus 1 to the communication apparatus 2 is spread in the time domain during the transmission and does not arrive as one data symbol at a certain timepoint at the receiving communication apparatus 2, but arrives as delayed symbols or echoes thereof at different timepoints due to the so-called multipath effects. Due to multipath effects of the respective transmission channel, consecutively transmitted data symbols cannot be clearly distinguished at the receiver side, but leak into each other due to the superposition of delayed versions or echoes of the respective preceding data symbol with the succeeding data symbol. This superposition leads to the well-known effect of intersymbol interference (ISI).

In figures 2 and 3, the intersymbol interference and how OFDM-systems deal with this problem is explained. Figure 2 shows schematically three consecutive OFDM-symbols transmitted from a transmitter of a OFDM communication apparatus. Transmitting the three consecutive OFDM symbols as they are (without cyclic extension), they are received on the receiving side as shown in rows 3,4,5 in figure 3, upper half. Due to multipath effects in the transmission channel, intersymbol interference exists between the consecutive OFDM data symbols due to the different delayed versions of the respective OFDM-symbols received on the receiving side. Row 3 of the OFDM-symbols show the entire superposition of received OFDM-symbols on the receiving side of the OFDM-system. Row 4 shows an example for the received OFDM-symbols over a first path of the transmission channel and row 5 shows an example for a second path. The first path is shorter than the second path, which means that the propagation of the OFDM-symbols over the second path is longer, e. g. due to reflection, as over the first path so that the symbols arrive later than the symbols over the first path. Both the first and the second path, however, are delayed compared to the direct transmission path, so that in both cases a respective echo (echo 1 and echo 2) is leaking from the respective preceding OFDM-symbol into the respective succeeding OFDM-symbol. All these effects taken together lead to the intersymbol interference shown in row 3. Thus, intersymbol interference is exhibited at the beginning of each OFDM-symbol on the receiving side, so that errors occur during the Fourier transformation in the receiving apparatus, since the window of the Fourier transformation is adapted to the entire data symbol length, which, however, is reduced due to the intersymbol interference thus leading to mistakes.

This problem is solved in known OFDM-systems by inserting a cyclic extension between consecutive OFDM-symbols on the transmitter side as shown in figure 1, lower half. The cyclic extension is thereby a copy of a part of the end of an OFDM-symbol, which is placed in front of the respective OFDM-symbol. With the cyclic extensions the effects of the intersymbol interference decay during the period of the cyclic extension on the receiving side and the actual OFDM-symbol is free of intersymbol interference, as shown in rows 6,7,8 of figure 3. Since the cyclic extension is a copy of an end part of the OFDM-symbol and placed in front of the OFDM-symbol, no mistakes occur during the Fourier transformation on the receiving side. Before the demodulation on the receiving side, the cyclic extension is removed so that the actual information contained in the OFDM-symbol can be processed as necessary.

The length of the cyclic extensions is determined by the channel delay profile. The length of a cyclic extension must be longer than the longest expected propagation delay of the transmission channel. In known OFDM-systems, the length of a cyclic extension is fixed and chosen to be longer than the maximum possible excess delay of a typical transmission channel. Thereby, the maximum excess delay of the transmission channel is fixed in advance based on the worst case system scenario.

However, since the length of the cyclic extension is fixed and set on the basis of a worst case system scenario, the transmitted overhead, in which no actual information is contained, is also fixed. Considering that in most cases the actual transmission channel exhibits better properties than the worst case channel, on the basis of which the length of the cyclic extension has been set, the length of the cyclic extension and thus the transmitted overhead is not optimal. Unnecessary overhead is transmitted yielding a reduced user data transmission rate.

The object of the present invention is therefore to provide a communication apparatus and a communication method for transmitting and receiving information as OFDM-symbols in a wireless telecommunication system, in which between two consecutive OFDM-symbols a cyclic extension of a part of at least one of the OFDM-symbols is transmitted and received, respectively, in which the transmitted overhead caused by the cyclic extensions is reduced while the transmission quality is maintained.

This object is achieved by a communication apparatus according to claim 1, a communication apparatus according to claim 12 and a communication method according to claim 16.

The communication apparatus for transmitting and receiving information as OFDM-symbols in a wireless telecommunication system, in which between two consecutive OFDM-symbols a cyclic extension of a part of at least one of the OFDM-symbols is transmitted and received, respectively, according to claim 1, comprises determining means for determining a delay value representing a channel delay of a transmission channel between the communication apparatus and another communication apparatus of the wireless telecommunication system, setting means for setting a value for the length of said cyclic extensions on the basis of said delay value determined in said determining means, and transmitting means for transmitting said value for the length of said cyclic extension.

The communication method for transmitting and receiving information as OFDM-symbols in a wireless telecommunication system, in which between two consecutive OFDM-symbols a cyclic extension of a part of at least one of the OFDM-symbols is transmitted and received, respectively, according to claim 16, comprises the steps of determining a delay value representing a channel delay of a transmission channel between a first communication apparatus and a second communication apparatus of the wireless telecommunication system, setting a value for the length of said cyclic extensions on the basis of the delay value determined in said determining step, and transmitting said value for the length of said cyclic extension.

Thus, the communication apparatus and the communication method according to the present invention measure the delay properties of the respectively used transmission channel, set a corresponding length value for the cyclic extensions and transmit the length value. Since one communication apparatus of a wireless telecommunication usually communicates with another communication apparatus of the wireless telecommunication system, e. g. a mobile station communicates with a base station, a receiving side measures the delay properties of the respectively used transmission channel, sets the delay value for the cyclic extensions and transmits the delay value back to the transmitting side, which uses the received length value to adaptively set the length of the cyclic extensions inserted between two consecutive OFDM-symbols. In case that both telecommunication apparatuses communicating with each other use the same or a similar transmission channel, it is sufficient when one of the communication apparatuses determines the delay properties of the transmission channel and transmits the respectively set delay value for the cyclic extensions to the other communication apparatus.

Particularly for this case, claim 12 defines a communication apparatus for transmitting and receiving information in form of OFDM-symbols in a wireless telecommunication system, in which between two consecutive OFDM-symbols a cyclic extension of a part of at least one of the OFDM-symbols is transmitted and received, respectively, with receiving means for receiving a length value representing the length of the cyclic extension, inserting means for generating and inserting a cyclic extension between two OFDM-symbols, whereby the length of said cyclic extension is set on the basis of said received length value, and transmitting means for transmitting OFDM-symbols, whereby a respective cyclic extension from said inserting means is inserted between two consecutive OFDM-symbols.

Thus, the present invention provides a possibility for reducing the transmission overhead caused by the cyclic extensions inserted between the OFDM-symbols significantly without effecting the transmission quality. The delay properties of the respectively used transmission channel can be determined regularly or at certain timepoints depending on predefined circumstances so that the cyclic extensions inserted between the OFDM-symbols have a length precisely adapted to the channel delay properties. The channel delay properties can e. g. be determined either before and after each communication or during the communication.

In the following section, advantageous features of the communication apparatus according to the present invention comprising the determining means for determining the delay value and respectively setting the length of the cyclic extensions are specified in more detail. Advantageously, the determining means comprises a comparing means for comparing a received reference symbol with an expected reference symbol and an extracting means for extracting a channel delay profile from the comparison result of the comparing means on the basis of which the delay value is determined. Thus, the comparing means performs a cross-correlation between the reference symbol transmitted from another communication apparatus with an expected reference symbol to obtain the delay properties of the transmission channel. In this case, the determining means can further comprise a threshold detecting means for detecting an upper and a lower threshold value in said channel delay profile, whereby the delay value is determined on the basis of the detected threshold values. The lower threshold value can e. g. be set to be slightly higher than the noise level and the upper threshold value can be set to the value of the highest response peak of the channel delay profile. It is further advantageous, when the determining means in this case comprises an estimating means for estimating the delay value as maximum delay value between the highest and the lowest channel response peak of the channel delay between the threshold values determined in the determining means. Thus, the length of the cyclic extensions is set on the basis of the maximum delay value, so that intersymbol interference on the receiving side is completely suppressed. In other applications, it might be sufficient to use a delay value lower than the maximum delay value to determine the length of the cyclic extensions whereby the transmission overhead is further reduced but the transmission quality is lowered, too.

Advantageously, the setting means comprises a storage means with a preset table containing delay values and corresponding length values and chooses upon receiving the delay value from the determining means a length value corresponding to the delay value from said preset table. Alternatively, the setting means comprises a calculating means for calculating the length value depending on the delay value obtained from the determining means. In this case, the length value of the cyclic extensions can be precisely adapted to the delay properties of the transmission channel on the basis of a respectively chosen calculation algorithm. In the first alternative, in which the length value is taken from a preset table, less processing is required, but the length value is only chosen from preset values and can thus not be adapted as precisely to the delay properties of the transmission channel as in the second alternative.

Further advantageously, the communication apparatus comprises an inserting means for generating and inserting a cyclic extension between two OFDM-symbols, whereby the length of the cyclic extension is set on the basis of the length value supplied from the setting means. Thus, the communication apparatus uses the determined length value for the cyclic extension itself for generating and inserting the cyclic extensions between the OFDM-symbols to be transmitted to another communication apparatus. This means, on the other hand, that both communication apparatuses communicating with each other use the same or a similar transmission channel. This is e. g. the case in an TDD-system (Time Division Duplex system), in which the same frequencies and coding mechanisms are used by both communication apparatuses but both communication apparatuses transmit their information during different time periods. Since, however, the same frequencies are used, the multipath effects on the transmission channels are the same or at least very similar, so that the same length value for the cyclic extensions can be used for both transmission directions.

Alternatively, the communication apparatus according to the present invention can comprise an inserting means for generating and inserting a cyclic extension between two OFDM-symbols, whereby the length of the cyclic extension is set on the basis of a length value received by the receiving means from another communication apparatus of the wireless telecommunication system as implied to the inserting means. This is particularly advantageous for the case that the two communication apparatuses communicating with each other use different transmission channels, as e. g. in an FDD communication system (Frequency Division Duplex communication system). Each communication apparatus in this case uses a different frequency range for the transmission of the OFDM-symbols, so that the multipath characteristics and thus the delay properties are different for each of the transmission channels. The respective communication apparatus determining the delay properties and respectively setting the length value for the cyclic extension does not use this length value but only transmits this length value to the other communication apparatus. The other communication apparatus determines the length value for the cyclic extensions in a similar way and transmits the length value, so that the respective cyclic extensions in each of the communication apparatuses is set on the basis of a received length value.

For both above cases the inserting means can generate the cyclic extension in two ways. According to a first possibility, the inserting means can generate the cyclic extension as a copy of an end part of the succeeding OFDM-symbol and inserts the copy between the succeeding and the preceding OFDM-symbol. Alternatively, the inserting means generates said cyclic extension as two adjacent parts, whereby the first part is a copy of an end part of the succeeding OFDM-symbol and the second part is a copy of the beginning part of the preceding OFDM-symbol, and inserts the first part in front of the beginning part of the succeeding OFDM-symbol and said second part behind the end part of said preceding OFDM-symbol. Thus, each OFDM-symbol is framed by cyclic extension parts being copies of a part of the respective opposite side of the OFDM-symbol.

In the following description, preferred embodiments of the present invention are explained in more detail relating to the enclosed drawings, in which
figure 1 shows a basic diagram of a wireless telecommunication system,
figure 2 shows a schematic diagram for explaining the data structure transmitted from a communication apparatus with and without cyclic extensions between consecutive OFDM-symbols,
figure 3 shows a schematic diagram for explaining the data structure in a receiving communication apparatus with and without cyclic extensions and for explaining intersymbol interference,
figure 4 shows a block diagram of a first embodiment of a communication apparatus according to the present invention,
figure 5 shows a block diagram of a second embodiment of a communication apparatus according to the present invention,
figure 6 shows a block diagram of a third embodiment of a communication apparatus according to the present invention,
figure 7 shows a first example for inserting a cyclic extension between two consecutive OFDM symbols, and
figure 8 shows a second example for inserting a cyclic extension.

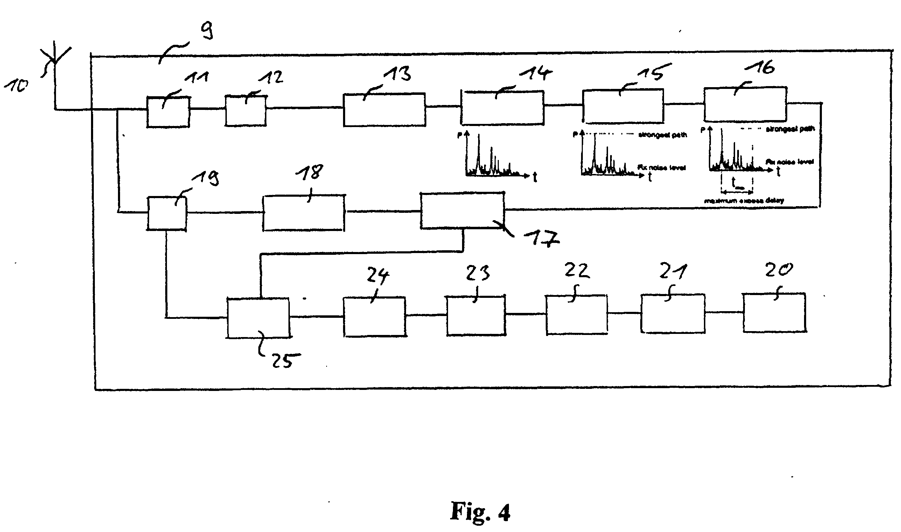

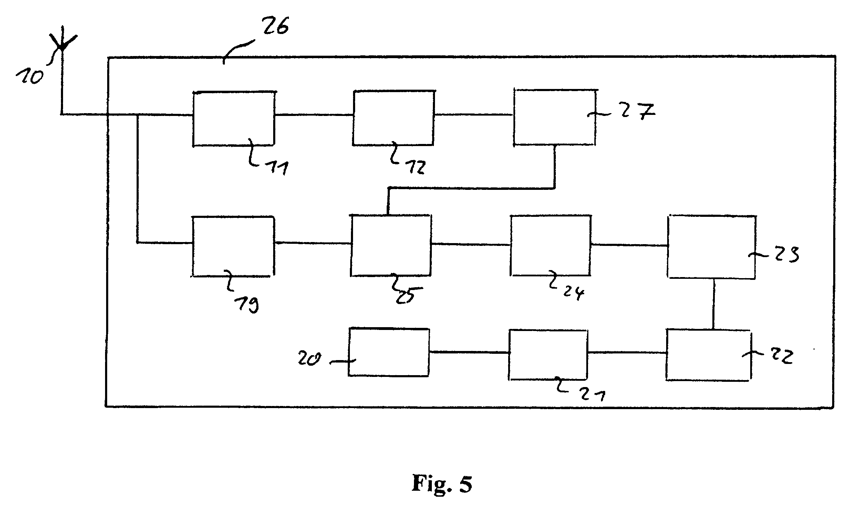

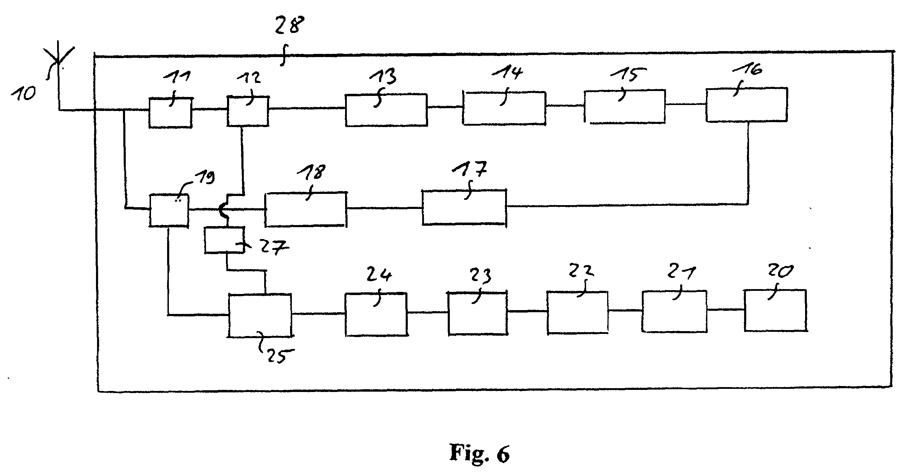

Figure 4 shows a block diagram of a first embodiment of a communication apparatus for transmitting and receiving information as OFDM symbols in a wireless telecommunication system according to the present invention. It is to be noted that the communication apparatus 9 shown in figure 4 as well as the communication apparatus 26 of the second embodiment and the communication apparatus 28 of the third embodiment shown in figures 5 and 6, respectively, additionally to the shown elements comprise elements necessary for a normal operation in the wireless telecommunication system for transmitting and receiving information as OFDM symbols. In the figures, only the elements necessary for explaining and performing the present invention are shown.

The communication apparatus 9 shown in figure 4 can for example be a mobile station or a base station of a wireless OFDM telecommunication system. The communication apparatus 9 comprises an antenna 10 for transmitting and receiving signals in a wireless transmission channel. Connected to the antenna 10 is a downconversion means 11 for downconverting received RF-signals into the base band. In a synchronizing means 12, the downconverted signals from the downconversion means 11 are synchronized, for example by autocorrelation or cross correlation. A comparing means, as e. g. a matched filter 13 is supplied with synchronized signals from the synchronizing means 12 and compares a received reference symbol with an expected reference symbol. Thus, the comparing means 13 performs e. g. a cross correlation in order to obtain differences between a received reference symbol and an expected reference symbol, whereby the differences obtained reflect the delay properties of the transmission channel in which the reference symbol has been received. The reference symbol received in the communication apparatus 9 is transmitted by a corresponding communication apparatus, the communication apparatus 9 is communicating with or intends to communicate with. It is to be noted, that the synchronizing means 12 and the comparing means 13 can be realized in one common synchronizing means, in which a comparison between a known signal and the received signal is performed. The result of the respective processing enables a synchronization on the one hand and a determination of the differences between the received reference symbol and an expected reference symbol on the other hand.

The comparison result obtained in the comparing means 13 is supplied to a profile extracting means 14, which extracts the channel delay profile therefrom. An example for such a delay profile is shown directly under the profile extracting means 14. A channel delay profile represents the receiving power of the received reference symbol over the time. The highest peak shown in the diagram over the profile extracting means 14 represents the transmission of a reference symbol over direct path between a transmitting communication apparatus and the receiving communication apparatus 9, whereas the other smaller peaks received at later time points are echoes of the reference symbol delayed due to multipath propagation characteristics, for example refraction, reflection or the like.

The extracted channel delay profile from the profile extracting means 14 is supplied to a threshold detecting means 15, which detects an upper and a lower threshold value in the received channel delay profile. The diagram directly under the threshold ejecting means shows an example for an upper and a lower threshold value in the channel delay profile received from the profile extracting means 14. In the shown example, the upper threshold value is determined to be the peak value of the strongest path, i.e. the highest received peak. The lower threshold value is said to be slightly above the noise level of the received signal. The upper and the lower threshold values can be set differently depending on the respective application. For example, the lower threshold value could be set to be 90% of the noise level of the received signal. An estimating means 16 then estimates a maximum delay value between the highest and the lowest channel response peak of the channel delay profile between the upper and the lower threshold.

The diagram directly under the estimating means 16 shows an example for the estimation of the maximum excess delay value tₘₐₓ between the highest peak and the lowest peak of the channel delay profile extracted in the profile extracting means 14 between the upper and the lower threshold values detected in the threshold detecting means 15. The maximum excess delay tₘₐₓ is the time value between the strongest transmission path and the weakest echo above the lower threshold value. Thus, it might be sufficient only to determine a lower threshold value in the detection threshold means 15. In the profile extracting means 14, a high precision in the calculation of the channel delay profile is achieved if the known and expected reference signal exhibits good cross correlation properties and small cross correlation sidelobes. Depending on the sensitivity of the receiver in the communication apparatus 9, not all transmission paths of the transmission channel must be considered. In the estimation means 16, a pre-set safety margin can be added to the delay value.

Then, the delay value estimated in the estimating means 16 is supplied to a setting means 17 which sets the length value for the cyclic extensions on the basis of the received delay value. Thereby, the setting means 17 may set the length value in two ways. The first possibility is, that the setting means comprises a storage means with a preset table containing delay values and corresponding length values for the cyclic extensions. Then, upon receiving the delay value from the estimating means 16, the setting means reads a length value which corresponds to the received delay value from said pre-set table. This first possibility requires almost no processing but the set length value for the cycling extensions is chosen from pre-set values and may therefore not be very precise. The second possibility is that the setting means comprises a calculation means for calculating the length value for the cyclic extensions depending on the delay value obtained from the estimating means 16. In this case, more processing is necessary, but using a respectively adopted calculating algorithm the length value for the cyclic extensions can be calculated very precisely.

The length value for the cyclic extensions set in the setting means 17 is then supplied to a generating means 18 which generates a corresponding OFDM data symbol containing the length value. The generating means 18 can thus comprise known elements such as channel coding means, interleaving means, sub-carrier modulation means, inverse fast Fourier transformation means, digital to analog converters and the like. The OFDM data symbol containing the length value information is then upconverted in an upconverting means 19 and transmitted via the antenna 10 to another communication apparatus, the communication apparatus 9 is communicating with or intense to communicate with an which had sent the reference symbol before.

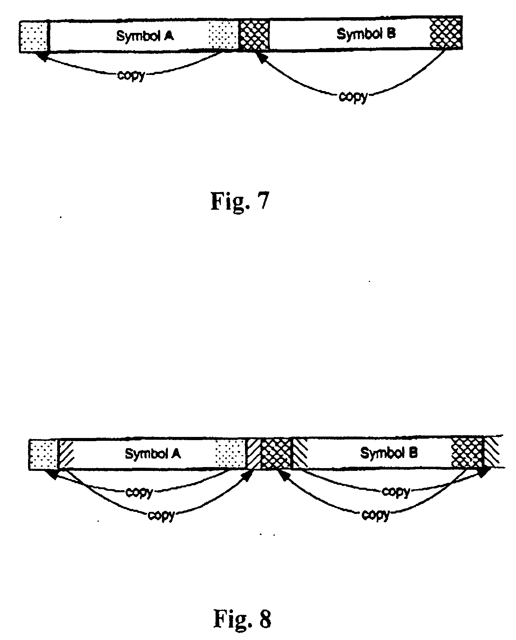

The communication apparatus 9 further comprises a data source 20, in which data to be transmitted to another communication apparatus are generated. The data are channelcoded in a channel coding means 21, interleaved in an interleaving means 22 and supplied to a modulating means 23, where the channelcoded and interleaved are modulated onto the OFDM-subcarriers. After a serial to parallel conversion, the modulated data are then transformed into the time domain by an inverse fast Fourier transformation means 24. The transformed data are then parallel to serial converted and supplied to an inserting means 25, which generates and inserts a cyclic extension between two OFDM-symbols to be transmitted, whereby the length of the cyclic extension is respectively set on the basis of the length value set in and supplied from the setting means 17. Thus, the inserting means 25 performs an adaptive generation and inserting of the cyclic extensions. Thereby, the inserting means 25 may generate the cyclic extension in two ways. The first possibility is shown in figure 7. Figure 7 shows two consecutive OFDM symbols A and B, whereby symbol A is succeeded by symbol B in time. The inserting means 25 copies an end part of symbol B and inserts this copy before the beginning of the symbol B. The other possibility is shown in figure 8. Figure 8 shows two consecutive OFDM symbols A and B, whereby symbol A is succeeded by symbol B in time. The inserting means 25 generates the cyclic extension as two adjacent parts. The first part is a copy of a beginning of symbol A and is inserted by the inserting means after the end of symbol A. The second part is a copy of an end part of the symbol B and is inserted by the inserting means before the beginning of the symbol B. Every transmitted OFDM-symbol is thus framed by cyclic extension parts being copies of a part of a respective opposite side of the OFDM symbol.

The communication apparatus 9 of the first embodiment shown in figure 4 thus determines the delay properties of a transmission channel and sets a length value for the cyclic extensions on the basis of these delay properties. Then, the length value is transmitted to another communication apparatus, the communication apparatus 9 is communicating with. It has to be noted, that this other communication apparatus had sent the reference symbol before, which has been used to determine the channel delay profile in the profile extracting means 14. Further, the communication apparatus 9 uses the length value set in the setting means 17 for the generation of the cyclic extensions used in the transmission of OFDM-symbols from the communication apparatus 9 to the connected other communication apparatus. Therefore, the communication apparatus 9 is particularly advantageous for use in telecommunication systems, in which two communicating communication apparatuses use the same or a similar transmission channel for the communication. This is e. g. the case in TDD-systems, since the same transmission frequencies and coding schemes are used. Therefore, it is sufficient, when one of the communication apparatuses, e. g. the communication apparatus 9, determines the delay properties of the transmission channel and generates a corresponding length value for the cyclic extensions. The cyclic extensions in both of the apparatuses are then generated and inserted between the OFDM-symbols on the basis of this length value determined in one of the communication apparatuses.

An example for a connected communication apparatus communicating with the communication apparatus 9 is shown in figure 5 as a second embodiment of a communication apparatus according to the present invention. The shown communication apparatus 26 is adapted to communicate with the communication apparatus 9 and does not have elements for determining delay properties of the transmission channel and setting a length value for the cyclic extensions. However, the communication apparatus 26 comprises a detecting means 27 for detecting a length value, e. g. transmitted from the communication apparatus 9. All shown elements of the communication apparatus 26 shown in figure 5 having the same reference numerals as the corresponding elements in the communication apparatus 9 shown in figure 4 have the identical functions, so that a description thereof is omitted. Thus, the communication apparatus 26 comprises an antenna 10, a downconversion means 11, a synchronizing means 12, the output of which is supplied to the determining means 27 for detecting a length value transmitted in a corresponding OFDM-symbol from a corresponding communication apparatus, e.g. the communication apparatus 9. The communication apparatus 26 further comprises a data source 20, a channelcoding means 21, an interleaving means 22, a subcarrier modulation means 23, an inverse fast Fourier transformation means 24, an inserting means 25 for generating and inserting cyclic extensions and a upconverting means 19. The detected length value is supplied from the detecting means 27 to the inserting means 25, which generates and inserts the cyclic extensions between two consecutive OFDM-symbols, whereby the length of the cyclic extensions is set on the basis of the received and detected length value from the detecting means 27.

The communication means 26 can e. g. be a mobile station, which has to be light and in which a low power consumption should be assured. By receiving the length value from a connected communication apparatus instead determining delay properties of the transmission channel and correspondingly setting a length value for the cyclic extensions, power can be saved. It is to be noted, that a communication means 26 further has to comprise elements for generating and transmitting a reference symbol to a connected communication means which compares the reference symbol to an expected reference symbol in order to determine delay properties of the transmission channel, as e. g. the communication means 9. Then, after having received a length value for the cyclic extensions, the communication means 26 can or cannot generate and transmit an acknowledgment information to the connected communication apparatus in order to acknowledge the receipt of the length value for the cyclic extensions, so that the communication apparatus having set the length value for the cyclic extensions can adapt his receiving and processing section to the newly set length of the cyclic extensions.

Further, it has to be noted, that for the initial communication, i. e. at the beginning of the communication e. g. between the communication apparatus 26 and the communication apparatus 9, the worst case length i. e. the maximum possible length for the cyclic extensions is used as a default value.

Figure 6 shows a third embodiment of a communication apparatus according to the present invention, namely a communication apparatus 28 essentially comprising the same elements as the communication apparatus 9 shown in and explained in relation to figure 4. The elements of the communication apparatus 28 identical to the elements of the communication apparatus 9 of figure 4 are designated with the same reference numerals and have the same function, so that an explanation thereof is omitted. However, one important difference between the communication apparatus 9 and the communication apparatus 28 shown in figure 6 is that the communication apparatus 28 does not use the length value for the cyclic extensions set in the setting means 17 for the generation of the cyclic extensions used for the transmission of data from the communication apparatus 28 to a connected communication apparatus, but uses a length value received from a connected communication apparatus for this purpose. Correspondingly, the inserting means 25 of the communication apparatus 28 for generating and inserting the cyclic extensions between two consecutive OFDM-symbols to be transmitted does not receive the length value for the cyclic extensions from the setting means 17, but from a detecting means 27 connected to the synchronizing means 12 and detecting a received length value. The communication apparatus 28 can e. g. be used in OFDM-telecommunication systems, in which two communication apparatuses transmit data on transmission channels having different transmission characteristics.

This is e. g. the case in a FDD-system, in which one communication apparatus transmits data in a first frequency band and a second communication apparatus communicating with the first communication apparatus transmits data in a second frequency band different from the first frequency band. Since the transmission frequency bands are different, the multipath characteristics can be different so that different length for the cyclic extensions can be used to optimize the transmission overhead reduction. Thereby, each of the communication apparatuses determines a length value for the cyclic extensions on the basis of delay properties of a transmission channel, in which it receives data and transmits the correspondingly set length value to the connected communication apparatus. The connected communication apparatus then uses the received length value for the generation of the cyclic extensions used to transmit data. Typically, two communication apparatuses 28 as shown in figure 6 would communicate with each other and exchange the respectively set length values for the cyclic extensions. The other functions and transmitting schemes are the same as the ones explained in relation to the communication apparatus 9 shown in figure 4 and the communication apparatus 26 shown in figure 5.

## Claims

1. Communication apparatus (9, 28) for transmitting and receiving information as OFDM-symbols in a wireless telecommunication system, in which between two consecutive OFDM-symbols a cyclic extension of a part of at least one of the OFDM-symbols is transmitted and received, respectively, with
determining means (13, 14, 15, 16) for determining a delay value representing a channel delay of a transmission channel between the communication apparatus and another communication apparatus of the wireless telecommunication system, setting means (17) for setting a value for the length of said cyclic extensions on the basis of said delay value determined in said determining means, and
transmitting means (19, 10) for transmitting said value for the length of said cyclic extension.

2. Communication apparatus (9, 28) according to claim 1,
**characterized in,**
that said determining means comprises a comparing means (13) for comparing a received reference symbol with an expected reference symbol and an extracting means (14) for extracting a channel delay profile from the comparison result of said comparing means on the basis of which said delay value is determined.

3. Communication apparatus (9, 28) according to claim 2,
**characterized in,**
that said determining means comprises a threshold detecting means (15) for detecting an upper and a lower threshold value in said channel delay profile whereby said delay value is determined on the basis of said detected threshold values.

4. Communication apparatus (9, 28) according to claim 3,
**characterized in,**
that said determining means comprises an estimating means (16) for estimating said delay value as maximum delay value between the highest and the lowest channel response peak of said channel delay between said threshold values determined in said determining means.

5. Communication apparatus (9, 28) according to one of the claims 1 to 4,
**characterized in,**
that said setting means (17) comprises a storage means with a preset table containing delay values and corresponding length values and chooses upon receiving said delay value from said determining means a length value corresponding to said delay value from said table.

6. Communication apparatus (9, 28) according to one of the claims 1 to 4,
**characterized in,**
that said setting means (17) comprises a calculating means for calculating said length value depending on said delay value obtained from said determining means.

7. Communication apparatus (9) according to one of the claims 1 to 6,
**characterized by**
inserting means (25) for generating and inserting a cyclic extension between two OFDM-symbols, whereby the length of said cyclic extension is set on the basis of said length value supplied from said setting means.

8. Communication apparatus (28) according to one of the claims 1 to 6,
**characterized by**
inserting means (25) for generating and inserting a cyclic extension between two OFDM-symbols, whereby the length of said cyclic extension is set on the basis of a length value received by said receiving means from another communication apparatus of the wireless telecommunication system and supplied to said inserting means.

9. Communication apparatus (9, 28) according to claim 7 or 8,
**characterized in,**
that said inserting means (25) generates said cyclic extension as a copy of an end part of the succeeding OFDM-symbol and inserts said copy between said succeeding and the preceding OFDM-symbol.

10. Communication apparatus (9, 28) according to claim 7 or 8,
**characterized in,**
that said inserting means (25) generates said cyclic extension as two adjacent parts, whereby the first part is a copy of an end part of the succeeding OFDM-symbol and the second part is a copy of a beginning part of the preceding OFDM-symbol, and inserts said first part in front of said beginning part of said succeeding OFDM-symbol and said second part behind the end part of said preceding OFDM-symbol.

11. Communication apparatus (26) for transmitting and receiving information in form of OFDM-symbols in a wireless telecommunication system, in which between two consecutive OFDM-symbols a cyclic extension of a part of at least one of the OFDM-symbols is transmitted and received, respectively, with
receiving means (10, 11) for receiving a length value representing the length of said cyclic extension,
inserting means (25) for generating and inserting a cyclic extension between two OFDM-symbols, whereby the length of said cyclic extension is set on the basis of said received length value, and
transmitting means (19, 10) for transmitting OFDM-symbols, whereby a respective cyclic extension from said inserting means is inserted between two consecutive OFDM-symbols.

12. Communication apparatus (26) according to claim 13,
**characterized in,**
that said inserting means generates said cyclic extension as a copy of an end part of the succeeding OFDM-symbol and inserts said copy between said succeeding and the preceding OFDM-symbol.

13. Communication apparatus (26) according to claim 11,
**characterized in,**
that said inserting means (25) generates said cyclic extension as two adjacent parts, whereby the first part is a copy of an end part of the succeeding OFDM-symbol and the second part is a copy of a beginning part of the preceding OFDM-symbol, and inserts said first part in front of said beginning part of said succeeding OFDM-symbol and said second part behind the end part of said preceding OFDM-symbol.

14. Communication method for transmitting and receiving information as OFDM-symbols in a wireless telecommunication system, in which between two consecutive OFDM-symbols a cyclic extension of a part of at least one of the OFDM-symbols is transmitted and received, respectively, comprising the following steps
determining a delay value representing a channel delay of a transmission channel between a first communication apparatus and a second communication apparatus of the wireless telecommunication system,
setting a value for the length of said cyclic extensions on the basis of said delay value determined in said determining step, and
transmitting said value for the length of said cyclic extension.

15. Communication method according to claim 14,
**characterized in,**
that said determining step comprises a comparing step for comparing a received reference symbol with an expected reference symbol and an extracting step for extracting a channel delay profile from the comparison result of said comparing step on the basis of which said delay value is determined.

16. Communication method according to claim 15,
**characterized in,**
that said determining step comprises a threshold detecting step for detecting an upper and a lower threshold value in said channel delay profile whereby said delay value is determined on the basis of said detected threshold values.

17. Communication method according to claim 16,
**characterized in,**
that said determining step comprises an estimating step for estimating said delay value as maximum delay value between the highest and the lowest channel response peak of said channel delay between said threshold values determined in said determining means.

18. Communication method according to one of the claims 14 to 17,
**characterized in,**
that in said setting step said length value is chosen, upon receiving said delay value determined in said determining step, from a preset table containing length values and corresponding delay values.

19. Communication method according to one of the claims 14 to 17,
**characterized in,**
that said setting step comprises a calculating step for calculating said length value depending on said delay value obtained in said determining step.

20. Communication method according to one of the claims 14 to 19,
**characterized by**
an inserting step for generating and inserting a cyclic extension between two OFDM-symbols, whereby the length of said cyclic extension is set on the basis of said length value set in said setting step.

21. Communication method according to claim 20,
**characterized in,**
that in said inserting step said cyclic extension is generated as a copy of an end part of the succeeding OFDM-symbol, whereby said copy is inserted between said succeeding and the preceding OFDM-symbol.

22. Communication method according to claim 20,
**characterized in,**
that in said inserting step said cyclic extension is generated as two adjacent parts, whereby the first part is a copy of an end part of the succeeding OFDM-symbol and the second part is a copy of a beginning part of the preceding OFDM-symbol, whereby said first part is inserted in front of said beginning part of said succeeding OFDM-symbol and said second part is inserted behind the end part of said preceding OFDM-symbol.

23. Communication method according to claim 22,
**characterized in,**
that said first part and said second part have the same length.
